# EUROPÄISCHE PATENTSCHRIFT

(11) **EP 2 487 385 B1**
(45) Veröffentlichungstag und Bekanntmachung des Hinweises auf die Patenterteilung: **08.01.2014**
(21) Anmeldenummer: 12000831.3
(22) Anmeldetag: 09.02.2012
(51) Int. Cl.: F16H 37/04, F16H 3/091, F16H 3/093, B60K 17/346

(54) **Geschwindigkeits-Wechselgetriebe für Kraftfahrzeuge**
Speed switching drive for motor vehicles
Boîte de vitesse pour véhicules automobiles

(30) Priorität: 14.02.2011 DE 102011011170
(43) Veröffentlichungstag der Anmeldung: 15.08.2012
(73) Patentinhaber: Audi AG, 85045 Ingolstadt (DE)
(72) Erfinder: Märkl, Johann, 85049 Ingolstadt (DE)

(56) Entgegenhaltungen:
- EP-A1- 0 092 964
- EP-A2- 1 281 892
- WO-A1-2006/084555
- DE-A1- 3 723 597
- DE-A1- 4 205 668
- DE-A1-102004 041 525
- DE-A1-102006 055 582
- DE-U1- 20 202 581
- FR-A1- 2 681 015
- JP-A- 60 227 044
- US-A1- 2011 030 488

## Beschreibung

Die Erfindung betrifft ein Geschwindigkeits-Wechselgetriebe für Kraftfahrzeuge gemäß dem Oberbegriff des Patentanspruches 1.

Beispielsweise durch die EP 1 532 383 B1 ist ein Geschwindigkeits-Wechselgetriebe bekannt, das eine Eingangswelle, eine achsparallel dazu angeordnete Vorgelegewelle und eine zur Eingangswelle koaxiale Abtriebswelle aufweist und bei dem zwischen einem Direktgang (höchstem Vorwärtsgang) und den anderen Gangzahnrädern eine Schaltkupplung vorgesehen ist, die im Direktgang die restlichen Gangzahnräder abkoppelt, so dass diese im entsprechenden Fahrbetrieb stillstehen. Vorteilhaft ist dabei, dass beim Fahren im Direktgang weniger Reibungs- und Panschverluste bei einem verbesserten Getriebewirkungsgrad auftreten. Bei einer derartigen, koaxialen Anordnung von Eingangswelle und Ausgangswelle ist eine derartige Abkopplung konstruktiv relativ einfach verwirklichbar; der verbesserte Getriebewirkungsgrad wird nur im höchsten Gang erzielt.

Die Druckschriften EP 0 092 964 A2, DE 42 05 668 A1 und DE 10 2006 055 582 A1 zeigen jeweils Wechselgetriebe, bei denen eine Eingangswelle durch eine Schalteinrichtung in unterschiedliche Teilgetriebe auf- und unterteilbar ist und ein Teilgetriebe abkoppelbar ist. Die EP 092964 A2 wird als nächst liegender Stand der Technik angesehen.

Aufgabe der Erfindung ist es, ein Wechselgetriebe mit mehreren Vorwärtsgängen und einem Rückwärtsgang und vorzugsweise mit nicht koaxialer Anordnung von Eingangswelle und Abtriebswelle vorzuschlagen, bei dem mit konstruktiv wenig aufwendigen Mitteln über einen erweiterten Fahrbetrieb verbesserte Wirkungsgrade erzielbar sind.

Die Lösung dieser Aufgabe gelingt erfindungsgemäß mit den Merkmalen des Patentanspruches 1. Vorteilhafte Weiterbildungen der Erfindung sind Gegenstand der Unteransprüche.

Erfindungsgemäß wird ein Wechselgetriebe vorgeschlagen, mit mehreren, über Zahnradsätze mittels wenigstens einer Gangwechseleinrichtung, insbesondere mittels Synchronkupplungen, schaltbaren Fahrgängen, insbesondere mit mehreren Vorwärtsgängen und einem Rückwärtsgang, wobei das Wechselgetriebe mittels wenigstens einer Schalteinrichtung, insbesondere mittels wenigstens einer Schaltkupplung, in zumindest zwei Teilgetriebe mit jeweils mehreren Gängen unterteilt oder aufgeteilt ist, dergestalt, dass in Abhängigkeit von einem mittels der wenigstens einen Gangwechseleinrichtung vorgegebenen Fahrgang und/oder in Abhängigkeit von definierten Schaltzuständen der wenigstens einen Schalteinrichtung wenigstens eines der Teilgetriebe geschaltet und wenigstens eines der Teilgetriebe abgekoppelt ist. Dabei ist die Eingangswelle des Wechselgetriebes durch eine Schalteinrichtung funktionell in zwei Eingangswellen unterteilt, die den Teilgetrieben mit entsprechenden Zahnradsätzen zugeordnet sind. Erfindungsgemäß ist vorgesehen, dass die Schalteinrichtung durch eine Doppel-Schaltkupplung gebildet ist, die in einer Neutralstellung die beiden Eingangswellen der Teilgetriebe voneinander trennt, während sie in der einen Schaltstellung die beiden Eingangswellen miteinander koppelt und in der anderen Schaltstellung einen Rückwärtsgang ausbildet. Die Schaltkupplung erfüllt somit in baulich und funktionell besonders günstiger Weise neben der Abkopplungsfunktion auch noch die Schaltung des Rückwärtsganges des Wechselgetriebes.

Nachfolgend werden nunmehr die Vorteile der erfindungsgemäßen Lösung der besseren Verständlichkeit wegen und ohne dass dies eine Einschränkung des durch die Ansprüche definierten Schutzumfangs sein soll, anhand einer konkreten Ausführungsform mit zwei Teilgetrieben erläutert, von denen das abkoppelbare Teilgetriebe als Teilgetriebe I und das bei abgekoppeltem Teilgetriebe I aktiv geschaltete bzw. schaltbare Teilgetriebe als Teilgetriebe II bezeichnet wird:
Insbesondere wenn dem Teilgetriebe II die längeren Getriebeübersetzungen und dem Teilgetriebe I die kürzeren Getriebeübersetzungen zugeordnet sind, kann über weite Bereiche des Fahrbetriebes mit günstigeren Getriebewirkungsgraden gefähren werden, während in den Bereichen niedrigerer Geschwindigkeiten des Kraftfahrzeuges die Reibungs- und Panschverluste aufgrund des geringeren Zeitanteils weniger gravierend sind und somit vernachlässigt werden können. Die vorgeschlagene Lösung des Abkoppelns zumindest eines Teilgetriebes im höheren Geschwindigkeits-Bereich verringert wesentlich den dazu erforderlichen steuerungs- und fertigungstechnischen Aufwand.

Bei einem Wechselgetriebe mit vier oder mehr Vorwärtsgängen wird vorgeschlagen, dass zumindest zwei höchste, nicht zwingend aufeinanderfolgende Gänge dem Teilgetriebe II zugeordnet sind. Die darunter liegenden Vorwärtsgänge und der Rückwärtsgang sind im Fahrbetrieb mit höherer Geschwindigkeit abgeschaltet. Bei sechs oder mehr Vorwärtsgängen können die vier höchsten Gänge dem Teilgetriebe II zugeordnet sein, so dass der Fahrbereich mit abgekoppeltem Teilgetriebe I deutlich erweitert ist. Ggf. kann die vorgeschlagene Getriebeauslegung sogar an ein im Fahrbetrieb häufig vorliegendes Fahrprofil eines Kraftfahrzeuges vorab angepasst sein.

Gemäß einer bevorzugten Weiterbildung wird vorgeschlagen, dass die Eingangswelle des Teilgetriebes II die schaltbaren Loszahnräder der höheren Gänge trägt, deren zugeordnete Festzahnräder auf einer Abtriebswelle gelagert sind, während die Eingangswelle des Teilgetriebes I die Festzahnräder der niedrigeren Gänge aufweist, deren schaltbare Loszahnräder auf der gemeinsamen Abtriebswelle gelagert sind. Daraus resultiert, dass bei geringem Mehraufwand das Teilgetriebe I bezüglich der miteinander kämmenden Zahnradsätze vollständig abgekoppelt ist und keinerlei Wirkungsgradverluste verursacht.

Zur Ausbildung des Rückwärtsganges wird gemäß einer ersten bevorzugten Ausführungsform vorgeschlagen, dass ein Loszahnrad bzw. allgemein ein Rückwärtsgangzahnrad über eine Nebenwelle mit Umkehrzahnrädern mit einem bevorzugt einem niedrigeren Gang zugeordneten, schaltbaren Vorwärtsgangzahnrad verbindet. Das Schaltrad des Rückwärtsganges auf der Eingangswelle ist möglich, weil die Nebenwelle eine zweistufige Übersetzung ermöglicht.

In einer abgewandelten Konstruktion des Wechselgetriebes kann die dem Teilgetriebe I zugeordnete Eingangswelle eine Hohlwelle sein, durch die hindurch die Eingangswelle des zweiten Teilgetriebes II verläuft, wobei die hohle Eingangswelle im Rücktrieb über die eine Schaltkupplung an die Eingangswelle des Teilgetriebes II ankoppelbar ist. Damit kehrt sich die Ausrichtung der Teilgetriebe I und II um, was ggf. aus konstruktiven Erwägungen oder aus Einbaugründen im Kraftfahrzeug von Vorteil sein kann.

Des Weiteren kann bei einer vorteilhaften Auslegung des Wechselgetriebes für ein Kraftfahrzeug mit Allradantrieb mit einem an die Abtriebswelle angeschlossenen Verteilerdifferenzial auch die Abtriebswelle zweigeteilt sein, wobei der Abtriebswellenabschnitt des Teilgetriebes I als Hohlwelle ausgeführt ist, die auf das Ausgleichsgehäuse des Verteilerdifferenzials abtreibt, dessen Ausgangswellen indessen ein hinteres Achsdifferenzial und im Rücktrieb durch die Hohlwelle hindurch auf den zweiten Abtriebswellenabschnitt zum Antrieb eines vorderen Achsdifferenzials abtreiben.

Dazu kann ferner die triebliche Verbindung zwischen dem Abtriebswellenabschnitt des Teilgetriebes II und der rücktreibenden Ausgangswelle des Teilgetriebes I über eine zwischen den Teilgetrieben I und II angeordnete Schaltkupplung bei geschaltetem Teilgetriebe II gelöst sein. Mit dieser einfachen Maßnahme wird in vorteilhafter Weise erreicht, dass im Fahrbetrieb in den niedrigeren Vorwärtsgängen bzw. mit Teilgetriebe I ein Allradantrieb, im Fahrbetrieb mit den höheren Vorwärtsgängen bzw. im Teilgetriebe II hingegen ein Antrieb nur einer Achse, insbesondere der Vorderachse des Kraftfahrzeuges, gegeben ist.

Dabei kann die Schaltkupplung auf der Abtriebswelle bevorzugt wiederum eine Doppel-Schaltkupplung sein, mittels der in der Neutralstellung die Verbindung zwischen dem Abtriebswellenabschnitt und der korrespondierenden Ausgangswelle gelöst ist, ferner in der einen Schaltstellung die Verbindung hergestellt und in der anderen Schaltstellung ein Rückwärtsgangrad auf dem Abtriebswellenabschnitt über die Nebenwelle mit Umkehrzahnrädern mit einem Rückwärtsgang-Festzahnrad auf der Eingangswelle des Teilgetriebes I gekoppelt ist.

Schließlich kann jeweils eines der den Rückwärtsgang bildenden Zahnräder des Wechselgetriebes mit einem Vorwärtsgangzahnrad kombiniert sein, was sowohl hinsichtlich des axial erforderlichen Bauraumes des Getriebes als auch hinsichtlich des fertigungstechnischen Aufwandes besonders vorteilhaft ist.

Mehrere Ausführungsbeispiele der Erfindung sind im Folgenden mit weiteren Einzelheiten näher erläutert. Die schematische Zeichnung zeigt in:
- Fig. 1: ein Geschwindigkeits-Wechselgetriebe für Kraftfahrzeuge mit einer Eingangswelle, einer Abtriebswelle und mit integrierten sechs Vorwärtsgängen und einem Rückwärtsgang, die mittels einer Schaltkupplung in zwei Teilgetriebe I und II gegliedert sind;
- Fig. 2: das Wechselgetriebe nach Fig. 1 mit einer anderen Gliederung der den Teilgetrieben I und II zugeordneten Vorwärtsgänge;
- Fig. 3: das Wechselgetriebe nach Fig. 1 mit einer umgekehrten Anordnung der beiden Teilgetriebe I und II;
- Fig. 4: das Wechselgetriebe nach Fig. 3 mit einer weiteren, alternativen nicht beanspruchten Anordnung bzw. einer Aufteilung des einen Teilgetriebes I in zwei Teilgetriebe Ia und Ib und mit zwei Schaltkupplungen;
- Fig. 5: ein zur Fig. 2 modifiziertes nicht beanspruchten Wechselgetriebe mit einer in die Eingangswelle und zusätzlich einer in die Abtriebswelle integrierten Schaltkupplung; und
- Fig. 6: ein weiteres, für einen Allradantrieb eines Kraftfahrzeuges konzipiertes Wechselgetriebe mit zwei Teilgetrieben I und II, einem Verteilerdifferenzial und einer Antriebsverteilung entweder auf beide Achsen des Kraftfahrzeuges oder nur auf die Vorderachse.

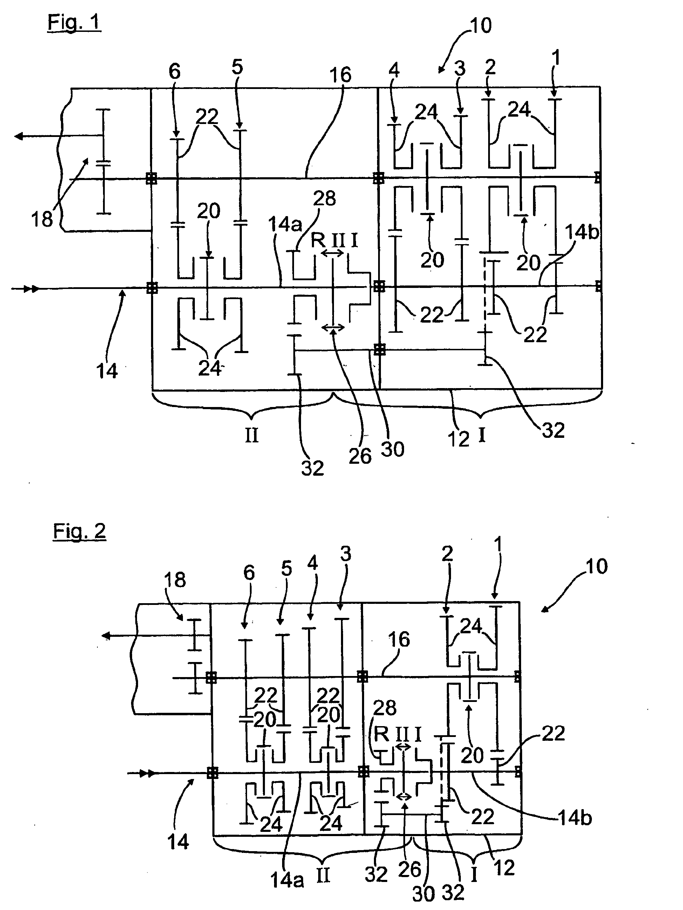

In der Fig. 1 ist als Blockschaltbild eine Geschwindigkeits-Wechselgetriebe 10 bzw. Schaltgetriebe gezeigt, mit einer in einem Getriebegehäuse 12 drehbar gelagerten Eingangswelle 14, einer Abtriebswelle 16 und einem integrierten Vorderachs-Differenzial (nicht dargestellt), das über einen mit der Abtriebswelle 16 verbundenen Stirnzahnradsatz 18 angetrieben ist.

Auf der Eingangswelle 14, die von einer Antriebsmaschine und über eine Trennkupplung (nicht dargestellt) angetrieben ist, und auf der Abtriebswelle 16 sind Zahnradsätze zur Bildung von Vorwärtsgängen 1 bis 6 angeordnet, die über nur angedeutete, bei Schaltgetrieben übliche Doppel-Synchronkupplungen 20 schaltbar sind.

Die Zahnradsätze der Vorwärtsgänge 1 bis 4 weisen vier Festzahnräder (einheitlich mit 22 bezeichnet) auf, die auf der Eingangswelle 14 angeordnet sind, während deren schaltbare Loszahnräder (einheitlich mit 24 bezeichnet) auf der Abtriebswelle 16 gelagert sind.

Ferner sind die Festzahnräder 22 der Vorwärtsgänge 5 und 6 auf der Abtriebswelle 16 befestigt, während deren schaltbare Loszahnräder 24 auf der Eingangswelle 14 gelagert sind.

Die Eingangswelle 14 ist zur Bildung zweier Teilgetriebe I und II durch eine Doppel-Schaltkupplung 26 in zwei Eingangswellen 14a und 14b unterteilt, wobei die Vorwärtsgänge 5 und 6 dem Teilgetriebe II und die Vorwärtsgänge 1 bis 4 dem Teilgetriebe I zugeordnet sind. Dabei sind des Weiteren wie ersichtlich die Festzahnräder 22 der Vorwärtsgänge 5 und 6 auf der vorderen Eingangswelle 14a und die Loszahnräder 24 der Vorwärtsgänge 1 bis 4 auf der hinteren Eingangswelle 14b angeordnet, während die korrespondierenden Zahnräder 22, 24 jeweils auf der gemeinsamen Abtriebswelle 16 positioniert sind.

Auf der Eingangswelle 14a ist zudem ein schaltbares Loszahnrad 28 drehbar gelagert, das in Verbindung mit einer im Getriebegehäuse 12 drehbar gelagerten, achsparallelen Nebenwelle 30 mit zwei Umkehrzahnrädern 32 einen Rückwärtsgang R bildet, wobei das eine Umkehrzahnrad 32 (in gestrichelten Linien angedeutet) mit dem Loszahnrad 24 für den Vorwärtsgang 2 in Eingriff ist. Es versteht sich, dass dazu die Nebenwelle 30 entsprechend aus der Zeichnungsebene heraus so versetzt ist, dass die Drehachsen der Wellen 14, 16, 30 in einem Querschnitt betrachtet ein Dreieck bilden.

Über die Schaltkupplung 26 (Verstellung in Richtung des Doppelpfeiles) sind in der gezeichneten Neutralstellung II die beiden Eingangswellen 14a, 14b trieblich voneinander getrennt. In der einen Schaltstellung I der Schaltkupplung 26 (auf der Zeichnung nach rechts) sind die beiden Eingangswellen 14a, 14b miteinander gekoppelt, in der entgegengesetzten Schaltstellung (in der Zeichnung nach links) ist das Loszahnrad 28 des Rückwärtsganges R geschaltet, wobei der Kraftfluss von der Eingangswelle 14a über die Nebenwelle 30, die Umkehrzahnräder 32 und z.B. das Loszahnrad 24 des Vorwärtsganges 2 auf die Abtriebswelle 16 verläuft. Die Synchronkupplung 20 für den Vorwärtsgang 2 muss dabei geschlossen sein; die abgekoppelte Eingangswelle 14b kann dabei frei drehen.

Im Fahrbetrieb mit den Vorwärtsgängen 1 bis 4 (Teilgetriebe I) ist die Schaltkupplung 26 in der rechten Schaltstellung I und der Kraftfluss verläuft somit jeweils über die gesamte Eingangswelle 14 des Getriebes 10, über die jeweils geschalteten Vorwärtsgänge 1 bis 4 bzw. deren Zahnradsätze 22, 24 auf die Abtriebswelle 16. Die Zahnradsätze der Vorwärtsgänge 5 und 6 drehen frei mit.

Im Fahrbetrieb mit den Vorwärtsgängen 5 und 6 (Teilgetriebe II) ist die Schaltkupplung 26 in ihrer Neutralposition II, so dass die Eingangswelle 14b des Teilgetriebes I mit den Festzahnrädern 22 abgekoppelt ist. Der Kraftfluss verläuft nunmehr über den jeweils geschalteten Vorwärtsgang 5 oder 6 bzw. dessen Zahnradsatz 24, 22 auf die Abtriebswelle 16. Da die Loszahnräder 24 auf der Abtriebswelle 16 nicht geschaltet sind, drehen nur die entsprechenden Kupplungskörper der Synchronkupplungen 20, während die Zahnräder 24, 22 der Vorwärtsgänge 1 bis 4, die Eingangswelle 14b und das Loszahnrad 28 des Rückwärtsganges R sowie die Nebenwelle 30 mit den Umkehrzahnrädern 32 stillstehen bzw. keine Reibungs- und Panschverluste im Wechselgetriebe 10 verursachen.

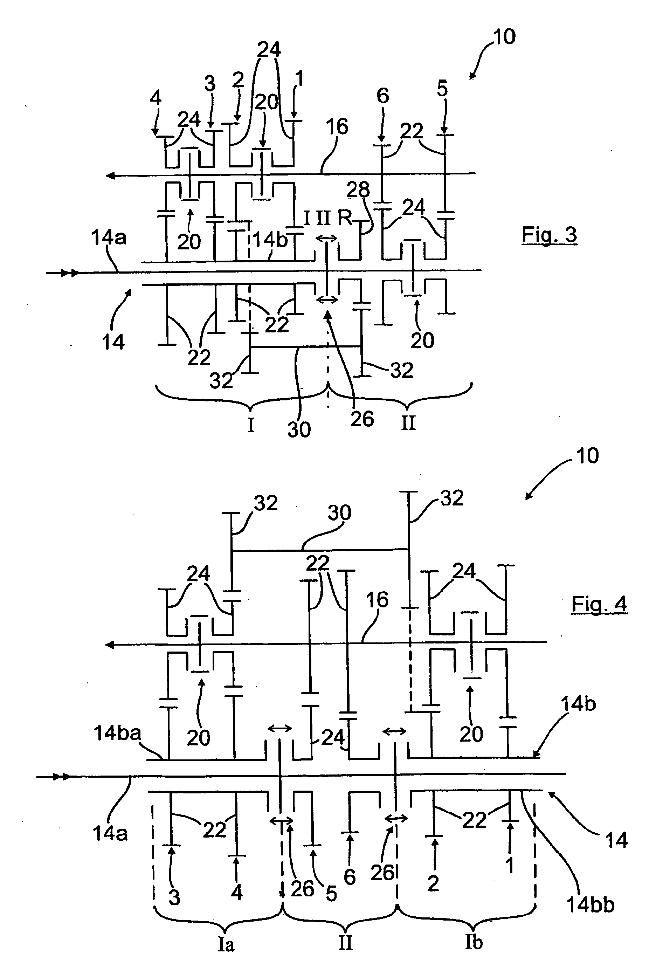

Die Fig. 2 zeigt ein der Fig. 1 entsprechendes, weiteres Wechselgetriebe 10, das nur soweit beschrieben ist, als es sich wesentlich von der Ausführung gemäß Fig. 1 unterscheidet. Gleiche Teile sind mit gleichen Bezugszeichen versehen. Dies gilt auch für die weiteren, in den Fig. 3 bis 6 dargestellten, weiter modifizierten Getriebe.

In der Fig. 2 sind die Vorwärtsgänge 1 und 2 sowie der Rückwärtsgang R dem Teilgetriebe I und die Vorwärtsgänge 3 bis 6 dem Teilgetriebe II zugeordnet.

Das heißt, dass nur die Festzahnräder 22 der Vorwärtsgänge 1 und 2 auf der abkoppelbaren Eingangswelle 14b angeordnet sind und mit den schaltbaren Loszahnrädern 24 auf der Abtriebswelle 16 kämmen.

Die Anordnung des Rückwärtsganges R mit dem Loszahnrad 28, der Nebenwelle 30 mit den Umkehrzahnrädern 32 und dem Loszahnrad 24 des Vorwärtsganges 2 ist wie vorbeschrieben.

Bei den vier Vorwärtsgängen 3 bis 6 sind die Festzahnräder 22 auf der Abtriebswelle 16 und die schaltbaren Loszahnräder 24 auf der ständig angetriebenen Eingangswelle 14a positioniert.

Dementsprechend ist bei einem Fahrbetrieb des Kraftfahrzeuges in den Vorwärtsgängen 3 bis 6 bzw. im Teilgetriebe II das Teilgetriebe I mit den Vorwärtsgängen 1 und 2 und dem Rückwärtsgang R abgekoppelt und verursacht in diesem erweiterten Fahrbereich keine Reibungs- und Panschverluste über die Zahnradsätze der Vorwärtsgänge 1 und 2 und des Rückwärtsganges.

Die Fig. 3 zeigt ein zur Fig. 1 ebenfalls modifiziertes Wechselgetriebe 10, bei dem die Teilgetriebe I und II, bezogen auf die Vorwärtsgänge, umgekehrt angeordnet sind bzw. bei dem das Teilgetriebe I vorne und das Teilgetriebe II dahinter (auf der Zeichnung rechtsseitig) angeordnet ist und bei dem wiederum dem Teilgetriebe I die vier Vorwärtsgänge 1 bis 4 und dem Teilgetriebe II die Vorwärtsgänge 5 und 6 zugeordnet sind.

Abweichend zur Fig. 1 ist die Eingangswelle 14 unterteilt in eine durchgehende Eingangswelle 14a des Teilgetriebes II und eine koaxial dazu im Getriebegehäuse (nicht dargestellt) gelagerte, hohle Eingangswelle 14b.

Die hohle Eingangswelle 14b des Teilgetriebes I trägt die Festzahnräder 22 der Vorwärtsgänge 1 bis 4, deren Loszahnräder 24 auf der gemeinsamen Abtriebswelle 16 gelagert und über die Synchronkupplungen 20 entsprechend schaltbar sind.

Das über die Schaltkupplung 26 in der einen Schaltstellung R schaltbare Loszahnrad 28 ist auf der durchgehenden Eingangswelle 14a drehbar gelagert und über die Nebenwelle 30 und die Umkehrzahnräder 32 mit dem Loszahnrad 24 (mit der gestrichelten Linie angedeutet) des Vorwärtsganges 2 trieblich verbunden.

In der auf der Zeichnung linken Schaltposition ist das Teilgetriebe I bzw. die hohle Eingangswelle 14b mit der inneren Eingangswelle 14a gekoppelt und es können die vier Vorwärtsgänge 1 bis 4 geschaltet werden.

In der Neutralposition II der Schaltkupplung 26 ist das Teilgetriebe I abgekoppelt und es können nur die Vorwärtsgänge 5 und 6 geschaltet werden, wobei wie vorbeschrieben die Zahnradsätze 22, 24 der Vorwärtsgänge 1 bis 4 und des Rückwärtsganges R stillstehen.

In der rechten Schaltstellung R der Schaltkupplung 26 ist der Rückwärtsgang geschaltet, wobei der Kraftfluss wiederum über die Nebenwelle 30 und das ebenfalls geschaltete Loszahnrad 24 des Vorwärtsganges 2 verläuft.

In der Fig. 4 ist ein weiter modifiziertes Wechselgetriebe 10 dargestellt, bei dem das Teilgetriebe II in das in zwei Untergetriebe Ia und Ib aufgeteilte Teilgetriebe I integriert ist.

Die Zahnradsätze der dem Teilgetriebe II zugeordneten Vorwärtsgänge 5 und 6 sind mit schaltbaren Loszahnrädern 24 auf der durchgehenden Eingangswelle 14a gelagert und kämmen mit den korrespondierenden Festzahnrädern 22 auf der gemeinsamen Abtriebswelle 16.

Das einerseits dazu angeordnete Untergetriebe Ia weist die Vorwärtsgänge 3 und 4 auf, wobei die entsprechenden Festzahnräder 22 auf einem ersten Hohlwellenabschnitt 14ba der Eingangswelle 14 und die korrespondierenden Loszahnräder 24 auf der Abtriebswelle 16 positioniert sind.

Auf der anderen Seite des Teilgetriebes I ist das zweite Untergetriebe Ib angeordnet, das einen zweiten Hohlwellenabschnitt 14bb aufweist, auf dem die Festzahnräder 22 der Vorwärtsgänge 1 und 2 befestigt sind. Die Festzahnräder 22 kämmen mit den schaltbaren Loszahnrädern 24 auf der Abtriebswelle 16. -

Die beiden Hohlwellenabschnitte 14ab, 14bb der Eingangswelle 14 sind über zwei Doppel-Schaltkupplungen 26 alternierend an die Eingangswelle 14a ankoppelbar, so dass in dieser Schaltposition entweder die Vorwärtsgänge 1 und 2 oder die Vorwärtsgänge 3 und 4 über die Synchronkupplungen 20 schaltbar sind.

Aus der mittleren Neutralposition der Schaltkupplungen 26 heraus nach rechts bzw. links können die Vorwärtsgänge 5 und 6 des mittleren Teilgetriebes II alternierend geschaltet werden, wobei dann die beiden Untergetriebe Ia, Ib abgekoppelt sind und deren Zahnradsätze 22, 24 stillstehen.

Der Rückwärtsgang R wird geschaltet, indem die Synchronkupplung 20 des Vorwärtsganges 4 des Untergetriebes Ia und gleichzeitig die Schaltkupplung 26 des Untergetriebes Ib geschlossen werden, wobei die Nebenwelle 30 für den Rückwärtsgang R das mittlere Teilgetriebe II überspannt und deren Umkehrzahnräder 32 mit dem Festzahnrad 22 (vgl. gestrichelt eingezeichnete Linie) des Vorwärtsganges 2 auf dem Hohlwellenabschnitt 14bb und dem Loszahnrad 24 des Vorwärtsganges 4 kämmen. Der Kraftfluss verläuft dabei über das Festzahnrad 22 des Untergetriebes Ib, über die Nebenwelle 30 und das geschaltete Loszahnrad 24 des Vorwärtsganges 4 auf die Abtriebswelle 16.

Es sei bemerkt, dass durch die beschriebene Anordnung der Getriebeelemente trotz der Aufteilung der Eingangswelle 14 in drei Abschnitte 14a, 14ba und 14bb insgesamt nur vier Schaltkupplungen 20, 26 wie bei den vorbeschriebenen Ausführungen erforderlich sind, deren Funktionen lediglich anders verteilt sind.

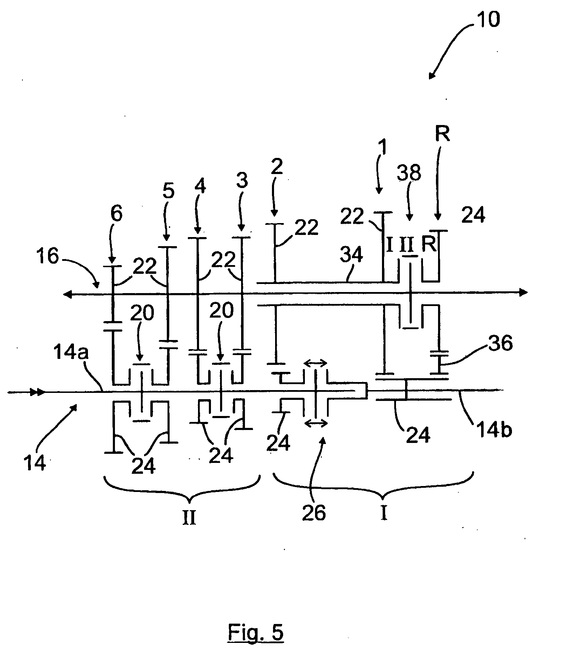

Die Fig. 5 zeigt ein weiter modifiziertes Wechselgetriebe 10, bei dem der Rückwärtsgang R ohne Anordnung einer Nebenwelle 30 ausgeführt ist.

Gemäß Fig. 5 ist die Eingangswelle 14 des Wechselgetriebes 10 in zwei Eingangswellen 14a, 14b aufgeteilt, die über die dazwischen angeordnete Schaltkupplung 26 in die zwei Teilgetriebe I und II umschaltbar sind.

Das Teilgetriebe II weist wiederum vier Vorwärtsgänge 3 bis 6 auf, deren Zahnradsätze durch vier schaltbare Loszahnräder 24 auf der Eingangswelle 14a und vier Festzahnräder 22 auf der Abtriebswelle 16 gebildet sind. Die Loszahnräder 24 sind über zwei Doppel-Synchronkupplungen 20 mit der Eingangswelle 14a kuppelbar.

Das Teilgetriebe I ist mit einer koaxial auf der Abtriebswelle 16 angeordneten Hohlwelle 34 versehen, die zwei Festzahnräder 22 der Zahnradsätze für die Vorwärtsgänge 1 und 2 trägt, deren schaltbare Loszahnräder 24 auf der Eingangswelle 14a (Gang 2) und auf der Eingangswelle 14b (Gang 1) gelagert bzw. angeordnet sind.

Das funktionell als Loszahnrad 24 wirkende Zahnrad auf der Eingangswelle 14b ist zweispurig ausgebildet und kämmt zugleich mit einem im Getriebegehäuse (nicht dargestellt) drehbar gelagerten Umkehrzahnrad 36, das mit einem auf der Abtriebswelle 16 gelagerten Loszahnrad 24 für den Rückwärtsgang R in Eingriff ist.

Eine zweite Schaltkupplung 38 auf der Abtriebswelle 16 koppelt in der Neutralstellung II die die beiden Festzahnräder 22 tragende Hohlwelle 34 des Teilgetriebes I von der Abtriebswelle 16 ab. In der Schaltstellung nach rechts wird das Loszahnrad 24 zum Schalten des Rückwärtsganges R mit der Abtriebswelle 16 verbunden und auch die Schaltkupplung 26 auf der Eingangswelle 14a nach rechts geschaltet. Der Kraftfluss für den Rückwärtsgang R verläuft dann über die Eingangswellen 14a, 14b, über das Loszahnrad 24, das Umkehrzahnrad 36 und das geschaltete Loszahnrad 24 auf die Abtriebswelle 16.

In der Mittelstellung der Schaltkupplungen 26 und 38 ist das Teilgetriebe I von dem Teilgetriebe II entkoppelt und die entsprechenden Zahnradsätze der Gänge 1, 2 und R drehen nicht.

In der linken Schaltposition der Schaltkupplung 38 und rechter Position der Schaltkupplung 26 ist der Vorwärtsgang 1 geschaltet; das Antriebsmoment wird über das Loszahnrad 24 auf der Eingangswelle 14b und das Festzahnrad 22 auf der Hohlwelle 34 auf die Schaltkupplung 38 und von dieser zur Abtriebswelle 16 geleitet.

Der Vorwärtsgang 2 wird bei noch geschlossener Schaltkupplung 38 und nach links geschalteter Schaltkupplung 26 über das Loszahnrad 24 auf der Eingangswelle 14a, das korrespondierende Festzahnrad 22 auf der Hohlwelle 34 und die Schaltkupplung 38 zur Abtriebswelle 16 geleitet.

Im Fahrbetrieb mit den ins Schnelle übersetzten Vorwärtsgängen 3 bis 6 des Teilgetriebes II sind die beiden Schaltkupplungen 26, 38 in der Neutralposition und demzufolge das Teilgetriebe I entkoppelt bzw. stillgesetzt.

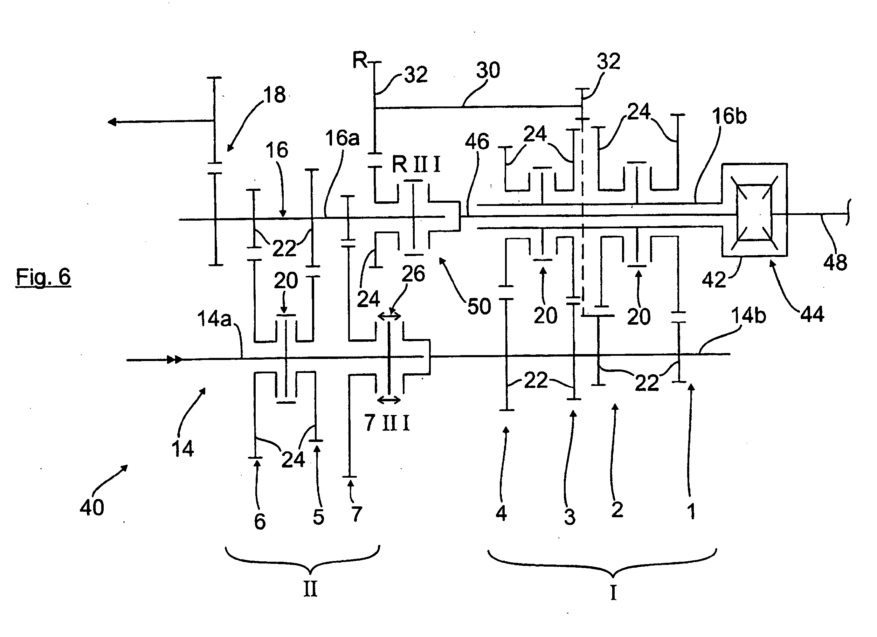

Die Fig. 6 zeigt ein für einen teilweisen Allradantrieb eines Kraftfahrzeuges konzipiertes Wechselgetriebe 40, bei dem die Eingangswelle 14 über eine erste Schaltkupplung 26 in eine vordere Eingangswelle 14a und eine hintere Eingangswelle 14b unterteilt ist.

Desgleichen ist die Abtriebswelle 16 in zwei Abschnitte 16a und 16b unterteilt, wobei die koaxiale Abtriebswelle 16b als Hohlwelle ausgeführt ist.

Das Wechselgetriebe 40 weist sieben Vorwärtsgänge 1 bis 7 und einen Rückwärtsgang R auf, die wiederum in zwei Teilgetriebe I und II aufgeteilt sind. Dabei sind die Vorwärtsgänge 1 bis 4 und der Rückwärtsgang R dem Teilgetriebe I und die Vorwärtsgänge 5 bis 7 dem Teilgetriebe II zugeordnet.

Das Teilgetriebe I mit den Vorwärtsgängen 1 bis 4 und dem Rückwärtsgang R setzt sich zusammen aus vier Festzahnrädern 22 auf der Eingangswelle 14b, die mit vier über Synchronkupplungen 20 schaltbaren Loszahnräder 24 auf der hohlen Abtriebswelle 16b zusammenwirken.

Die hohle Abtriebswelle 16b treibt auf das Ausgleichsgehäuse 42 eines Verteilerdifferenziales 44 (z. B. ein Kegelraddifferenzial) ab, dessen Ausgangswelle 48 ein hinteres Achsdifferenzial (nicht dargestellt) für den Antrieb der hinteren Räder des Kraftfahrzeuges antreibt, während die zweite Ausgangswelle 46 im Rücktrieb durch die hohle Abtriebswelle 16b hindurch und über eine zweite Doppel-Schaltkupplung 50 auf die vordere Abtriebswelle 16a abtreibt, die über den Stirnzahnradsatz 18 trieblich auf das vordere Achsdifferenzial zum Antrieb der vorderen Räder des Kraftfahrzeuges wirkt. Die Schaltkupplung 50 zwischen der Abtriebswelle 16a und der Ausgangswelle 46 des Verteilerdifferenziales 44 trennt in der mittleren Neutralstellung II die beiden Wellen, während sie in der rechten Schaltstellung die beiden Wellen 16a, 46 miteinander koppelt. In der linken Schaltstellung verbindet sie das Loszahnrad 24 auf der Abtriebswelle 16a für den Rückwärtsgang R über die Nebenwelle 30 und deren Umkehrzahnräder 32 mit dem Festzahnrad 22 auf der Eingangswelle 14b (der Zahneingriff zwischen dem Umkehrzahnrad 32 und dem Festzahnrad 22 ist wiederum durch die eingezeichnete, gestrichelte Linie angedeutet).

Die Schaltkupplung 26 auf der Eingangswelle 14 trennt in ihrer Neutralstellung II die beiden Eingangswellen 14a, 14b, während sie in der rechten Schaltstellung diese miteinander koppelt. In der linken Schaltstellung der Schaltkupplung 26 verbindet diese zum Schalten des Vorwärtsganges 7 das korrespondierende Loszahnrad 24 mit der Eingangswelle 14a.

Im Fahrbetrieb mit den Vorwärtsgängen 5 und 6 über das Teilgetriebe II sind die beiden Schaltkupplungen 26 und 50 in der Neutralstellung. Der Vorwärtsgang 7 des Teilgetriebes II wird geschaltet, indem die Schaltkupplung 26 in der linken Schaltstellung die Eingangswelle 14a mit dem Loszahnrad 24 kuppelt. Der Abtrieb auf die Abtriebswelle 16a erfolgt bei stillstehenden Zahnrädern und Wellen des Teilgetriebes I nur auf die Vorderachse des Kraftfahrzeuges.

Im Fahrbetrieb mit den Vorwärtsgängen 1 bis 4 bzw. im Teilgetriebe I sind die beiden Schaltkupplungen 26, 50 in die rechte Position geschaltet und verbinden die beiden Eingangswellen 14a, 14b und die Abtriebswelle 16a mit der Ausgangswelle 46 des Verteilerdifferenziales 44. Der Kraftfluss verläuft dann bei entsprechend geschalteten Synchronkupplungen 20 von der Eingangswelle 14 über den jeweiligen Zahnradsatz 22, 24 des geschalteten Vorwärtsganges 1 bis 4 auf die hohle Abtriebswelle 16b und von dieser auf das Verteilerdifferenzial 44, die das Antriebsmoment auf die beiden Ausgangswellen 46, 48 und schließlich auf das hintere Achsdifferenzial und über die Abtriebswelle 16a und den Stirnzahnradsatz 18 auf das vordere Achsdifferenzial verteilt.

Zum Schalten des Rückwärtsganges R bleibt die Schaltkupplung 26 in der rechten Position geschaltet, während die Schaltkupplung 50 in die linke Position umgeschaltet wird. Das Antriebsmoment verläuft dann über die Eingangswelle 14 auf das Festzahnrad 22 des Vorwärtsganges 2 und von diesem über die Nebenwelle 30 mit den Umkehrzahnrädern 32 auf das korrespondierenden Loszahnrad 24 und über die Schaltkupplung 50 auf die Abtriebswelle 16a bzw. das vordere Achsdifferenzial des Kraftfahrzeuges.

Das Kraftfahrzeug wird somit in den Vorwärtsgängen 1 bis 4 (bei entsprechend hohen Antriebsmomenten an den Rädern) mit Allradantrieb betrieben, während es in den höheren Geschwindigkeiten zugeordneten Vorwärtsgängen 5 bis 7 (bei niedrigeren Antriebsmomenten) und im Rückwärtsgang R nur auf die Vorderachse abtreibt. Ggf. kann die Anordnung so modifiziert sein, dass auch der Rückwärtsgang R in den Allradbetrieb einbezogen ist.

Die Schaltkupplungen 26, 38, 50 können bekannte Synchronkupplungen sein, wie sie bei Schaltgetrieben üblicherweise verwendet sind.

Obwohl vorstehend anhand der beispielhaften Darstellungen der Fig. 1 bis 6 der Abtrieb vorne über eine Stirnradstufe zu einem Differenzial gezeigt ist, ist es selbstverständlich möglich, den Abtrieb in an sich bekannter Weise hinten anzuordnen.

Weiterhin ist es möglich, den Radsatz der jeweiligen Ausführungsform gespiegelt anzuordnen, sofern dies technisch und/oder bauraummäßig möglich bzw. sinnvoll ist.

## Patentansprüche

1. Geschwindigkeits-Wechselgetriebe für Kraftfahrzeuge, mit mehreren, über Zahnradsätze mittels wenigstens einer Gangwechseleinrichtung schaltbaren Fahrgängen, wobei das Wechselgetriebe (10; 40) mittels wenigstens einer Schalteinrichtung (26; 38; 50) in zumindest zwei Teilgetriebe (I, II) mit jeweils mehreren Gängen unterteilt oder aufgeteilt ist, dergestalt, dass in Abhängigkeit von einem mittels der wenigstens einen Gangwechseleinrichtung vorgegebenen Fahrgang und/oder in Abhängigkeit von definierten Schaltzuständen der wenigstens einen Schalteinrichtung (26; 38; 50) wenigstens eines der Teilgetriebe (II) geschaltet und wenigstens eines der Teilgetriebe (I) abgekoppelt ist, und wobei eine Eingangswelle (14) durch die Schalteinrichtung (26) funktionell in zwei Eingangswellen (14a, 14b) unterteilt ist, die zwei Teilgetrieben (I, II) mit entsprechend zugeordneten Zahnradsätzen zugeordnet sind, **dadurch gekennzeichnet, dass** die Schalteinrichtung (26) eine Doppel-Schaltkupplung ist, die in einer Neutralstellung die beiden Eingangswellen (14a, 14b) der Teilgetriebe (I, II) voneinander trennt, während sie in der einen Schaltstellung die beiden Eingangswellen (14a, 14b) miteinander koppelt und in der anderen Schaltstellung einen Rückwärtsgang ausbildet.

2. Wechselgetriebe nach Anspruch 1, **dadurch gekennzeichnet, dass** dem wenigstens einen abkoppelbaren Teilgetriebe (I) die kürzeren Getriebeübersetzungen des Wechselgetriebe (10; 40) zugeordnet sind, insbesondere die gegenüber dem wenigstens einen geschalteten und/oder nicht abgekoppelten Teilgetriebe (II) kürzeren Getriebeübersetzungen zugeordnet sind.

3. Wechselgetriebe nach Anspruch 2, **dadurch gekennzeichnet, dass** bei vier oder mehr Vorwärtsgängen zumindest zwei, nicht zwingend aufeinanderfolgende höchste Gänge dem geschalteten und/oder nicht abgekoppelten Teilgetriebe (II) zugeordnet sind.

4. Wechselgetriebe nach Anspruch 3, **dadurch gekennzeichnet, dass** bei sechs oder mehr Vorwärtsgängen die drei oder vier höchsten Gänge dem geschalteten und/oder nicht abgekoppelten Teilgetriebe (II) zugeordnet sind.

5. Wechselgetriebe nach einem oder mehreren der vorhergehenden Ansprüche, **dadurch gekennzeichnet**, die Eingangswelle (14a) des bei abgekoppeltem Teilgetriebe (I) geschalteten oder nicht abgekoppelten Teilgetriebes (II) die schaltbaren Loszahnräder (24) der höheren Gänge trägt, deren zugeordnete Festzahnräder (22) auf einer Abtriebswelle (16) angeordnet sind, und dass die Eingangswelle (14b) des abkoppelbaren Teilgetriebes (I) die Festzahnräder (22) der demgegenüber niedrigeren Gänge aufweist, deren zugeordnete schaltbare Loszahnräder (24) auf der gemeinsamen Abtriebswelle (16) gelagert sind.

6. Wechselgetriebe nach einem der vorhergehenden Ansprüche, **dadurch gekennzeichnet, dass** zur Ausbildung des Rückwärtsgangs vorgesehen ist, dass ein Loszahnrad (24) über eine Nebenwelle (30) mit Umkehrzahnrädern (32) mit einem einem definierten Gang, insbesondere einem der niedrigeren Gänge (2) zugeordneten, schaltbaren Loszahnrad (24) verbindet.

7. Wechselgetriebe nach einem oder mehreren der vorhergehenden Ansprüche, **dadurch gekennzeichnet, dass** eine, einem abkoppelbaren ersten Teilgetriebe (I) zugeordnete Eingangswelle (14b) eine Hohlwelle ist, durch die hindurch eine weitere Eingangswelle (14a) eines zweiten, bei abgekoppeltem ersten Teilgetriebe (I) geschalteten Teilgetriebes (II) verläuft, und dass die hohle Eingangswelle (14b) im Rücktrieb über die Schalteinrichtung (26) an die Eingangswelle (14a) des zweiten Teilgetriebes (II) ankoppelbar ist.

8. Wechselgetriebe nach einem oder mehreren der vorhergehenden Ansprüche, **dadurch gekennzeichnet, dass** bei einer Auslegung mit an die Abtriebswelle (16) angeschlossenem Verteilerdifferenzial (44) die Abtriebswelle (16) zweigeteilt ist, wobei die Abtriebswelle (16b) eines der Teilgetriebe (I), insbesondere des abkoppelbaren Teilgetriebes (I) als Hohlwelle ausgeführt ist, die auf das Ausgleichsgehäuse (42) des Verteilerdifferenzials (44) abtreibt, dessen Ausgangswellen (46, 48) ein hinteres Achsdifferenzial und im Rücktrieb durch die hohle Abtriebswelle (16b) hindurch und über die zweite, vordere Abtriebswelle (16a) ein vorderes Achsdifferenzial antreiben.

9. Wechselgetriebe nach Anspruch 8, **dadurch gekennzeichnet, dass** die triebliche Verbindung zwischen der vorderen Abtriebswelle (16a) des weiteren Teilgetriebes (II) und der rücktreibenden Ausgangswelle (46) des ersten, insbesondere abkoppelbaren Teilgetriebes (I) über eine zwischen den Teilgetrieben **(I,** II) angeordnete Schaltkupplung (50) bei geschaltetem weiteren Teilgetriebe (II) gelöst ist.

10. Wechselgetriebe nach Anspruch 9, **dadurch gekennzeichnet, dass** die Schaltkupplung (50) auf der Abtriebswelle (16) eine Doppel-Schaltkupplung ist, mittels der in der Neutralstellung die Verbindung zwischen der Abtriebswelle (16a) und der korrespondierenden Ausgangswelle (46) gelöst ist, in der einen Schaltstellung die Verbindung hergestellt und in der anderen Schaltstellung ein Loszahnrad (24) auf der Abtriebswelle (16a) über die Nebenwelle (30) mit Umkehrzahnrädern (32) mit dem Festzahnrad (22) für den Vorwärtsgang (2) auf der Eingangswelle (14b) des abkoppelbaren Teilgetriebes (I) gekoppelt ist.

11. Wechselgetriebe nach einem oder mehreren der vorhergehenden Ansprüche, **dadurch gekennzeichnet, dass** jeweils eines der einen Rückwärtsgang (R) bildenden Zahnräder (32; 36) mit einem Festzahnrad (22) oder einem Loszahnrad (24) für einen Vorwärtsgang (2 oder 1) kombiniert ist.

## Claims

1. Variable speed transmission for motor vehicles, having a plurality of gears that can be selected using sets of gear wheels by means of at least one gear selector, the variable speed transmission (10; 40) being divided or subdivided by at least one switching device (26; 38; 50) into at least two partial transmissions (I, II) each having several gears, such that, depending on a gear set by means of the at least one gear selector, and/or depending on defined switched states of the at least one switching device (26; 38; 50), at least one of the partial transmissions (II) is selected and at least one of the partial transmissions (I) is disengaged, and wherein an input shaft (14) is functionally subdivided by the switching device (26) into two input shafts (14a, 14b) which are associated with two partial transmissions (I, II) with correspondingly associated sets of gear wheels, **characterised in that** the switching device (26) is a double shift clutch which, in a neutral position, separates the two input shafts (14a, 14b) of the partial transmissions (I, II) from one another, while in one selected position it couples the two input shafts (14a, 14b) to one another and in the other selected position it forms a reverse gear.

2. Variable speed transmission according to claim 1, **characterised in that** the at least one disengageable partial transmission (I) is associated with the shorter gear step-up ratios of the variable speed transmission (10; 40), particularly the gear step-up ratios that are shorter than the at least one partial transmission (II) that has been selected and/or not disengaged.

3. Variable speed transmission according to claim 2, **characterised in that**, in the case of four or more forward gears, at least two not necessarily sequential highest gears are associated with the partial transmission (II) that has been selected and/or not disengaged.

4. Variable speed transmission according to claim 3, **characterised in that**, in the case of six or more forward gears, the three or four highest gears are associated with the partial transmission (II) that has been selected and/or not disengaged.

5. Variable speed transmission according to one or more of the preceding claims, **characterised in that** the input shaft (14a) of the partial transmission (II) that has been selected or not disengaged while the partial transmission (I) is disengaged carries the switchable idler gear wheels (24) of the higher gears, the associated fixed gear wheels (22) of which are arranged on a driven shaft (16), and **in that** the input shaft (14b) of the disengageable partial transmission (I) comprises the fixed gear wheels (22) of the gears that are lower by comparison, the associated switchable idler gear wheels (24) of which are mounted on the common driven shaft (16).

6. Variable speed transmission according to one of the preceding claims, **characterised in that**, to form the reverse gear, it is provided that an idler gear wheel (24) connects, via an auxiliary shaft (30) having reverse gear wheels (32), with a switchable idler gear wheel (24) associated with a defined gear, particularly one of the lower gears (2).

7. Variable speed transmission according to one or more of the preceding claims, **characterised in that** an input shaft (14b) associated with a disengageable first partial transmission (I) is a hollow shaft through which there extends a further input shaft (14a) of a second partial transmission (II) that is selected when the first partial transmission (I) is disengaged, and **in that** in reverse drive the hollow input shaft (14b) can be coupled by means of the switching device (26) to the input shaft (14a) of the second partial transmission (II).

8. Variable speed transmission according to one or more of the preceding claims, **characterised in that**, in an arrangement having a distributor differential (44) connected to the driven shaft (16), the driven shaft (16) is divided in two, the driven shaft (16b) of one of the partial transmissions (I), particularly the disengageable partial transmission (I), being embodied as a hollow shaft that drives through onto the compensating housing (42) of the distributor differential (44), the output shafts (46, 48) of which drive a rear axial differential and, in reverse, drive through the hollow driven shaft (16b) and drive a front axial differential via the second, front driven shaft (16a).

9. Variable speed transmission according to claim 8, **characterised in that** the driving connection between the front driven shaft (16a) of the further partial transmission (II) and the reverse output shaft (46) of the first, particularly disengageable partial transmission (I) is released by means of a clutch (50) arranged between the partial transmissions (I, II) when the further partial transmission (II) is selected.

10. Variable speed transmission according to claim 9, **characterised in that** the clutch (50) on the driven shaft (16) is a double shift clutch by means of which in the neutral position the connection between the driven shaft (16a) and the corresponding output shaft (46) is released, in one selected position the connection is made and in the other selected position an idler gear wheel (24) on the driven shaft (16a) is coupled, via the auxiliary shaft (30) with reverse gear wheels (32), to the fixed gear wheel (22) for the forward gear (2) on the input shaft (14b) of the disengageable partial transmission (I).

11. Variable speed transmission according to one or more of the preceding claims, **characterised in that** in each case one of the gear wheels (32; 36) forming a reverse gear (R) is combined with a fixed gear wheel (22) or an idler gear wheel (24) for a forward gear (2 or 1).

## Revendications

1. Boîte de vitesses pour véhicules à moteur avec plusieurs rapports commutables par l'intermédiaire de jeux de pignons à l'aide d'au moins un dispositif de changement de vitesses, la boîte de vitesses (10 ; 40) étant divisée ou subdivisée à l'aide d'au moins un dispositif de commutation (26 ; 38 ; 50) en au moins deux boîtes de vitesses partielles (I, II), chacune avec plusieurs rapports, de telle sorte que, en fonction d'un rapport prédéterminé à l'aide de l'au moins un dispositif de changement de vitesses et/ou en fonction d'états de commutation définis de l'au moins un dispositif de commutation (26 ; 38 ; 50), au moins une des boîtes de vitesses partielles (II) est commutée et au moins une des boîtes de vitesses partielles (I) est désaccouplée, et un arbre d'entrée (14) étant subdivisé fonctionnellement par le dispositif de commutation (26) en deux arbres d'entrée (14a, 14b) qui sont alloués à deux boîtes de vitesses partielles (I, II) avec des jeux de pignons alloués de manière correspondante, **caractérisée en ce que** le dispositif de commutation (26) est un embrayage à double commutation qui, en position neutre, sépare les deux arbres d'entrée (14a, 14b) des boîtes de vitesses partielles (I, II) l'un de l'autre tandis que, dans l'une des positions de commutation, il couple entre eux les deux arbres d'entrée (14a, 14b) et, dans l'autre position de commutation, il forme un rapport de marche arrière.

2. Boîte de vitesses selon la revendication 1, **caractérisée en ce que**, à l'au moins une boîte de vitesses partielle (I) désaccouplable sont alloués les rapports de transmission plus courts de la boîte de vitesses (10 ; 40), et plus particulièrement sont alloués les rapports de transmission plus courts par rapport à l'au moins une boîte de vitesses partielle (II) commutée et/ou non désaccouplée.

3. Boîte de vitesses selon la revendication 2, **caractérisée en ce que**, pour quatre rapports de marche avant ou plus, au moins deux rapports les plus élevés, pas forcément consécutifs sont alloués à la boîte de vitesses partielle (II) commutée et/ou non désaccouplée.

4. Boîte de vitesses selon la revendication 3, **caractérisée en ce que**, pour six rapports de marche avant ou plus, les trois ou quatre rapports les plus élevés sont alloués à la boîte de vitesses partielle (II) commutée et/ou non désaccouplée.

5. Boîte de vitesses selon une ou plusieurs des revendications précédentes, **caractérisée en ce que** l'arbre d'entrée (14a) de la boîte de vitesses partielle (II) commutée ou non désaccouplée lorsque la boîte de vitesses partielle (I) est désaccouplée porte les pignons libres (24) commutables des rapports plus élevés, dont les pignons fixes (22) alloués sont disposés sur un arbre entraîné (16) et **en ce que** l'arbre d'entrée (14b) de la boîte de vitesses partielle (I) désaccouplable comprend les pignons fixes (22) des rapports relativement inférieurs, dont les pignons libres (24) commutables alloués sont logés sur l'arbre entraîné commun (16).

6. Boîte de vitesses selon l'une quelconque des revendications précédentes, **caractérisée en ce que**, pour la formation du rapport de marche arrière, il est prévu qu'un pignon libre (24) soit relié, par l'intermédiaire d'un arbre secondaire (30) avec des pignons inverseurs (32), à un pignon libre (24) commutable alloué à un rapport défini, plus particulièrement à un des rapports inférieurs (2).

7. Boîte de vitesses selon une ou plusieurs des revendications précédentes, **caractérisée en ce qu'**un arbre d'entrée (14b) alloué à une première boîte de vitesses partielle (I) désaccouplable est un arbre creux à travers lequel s'étend un autre arbre d'entrée (14a) d'une deuxième boîte de vitesses partielle (II) commutée lorsque la première boîte de vitesses partielle (I) est désaccouplée et **en ce que** l'arbre d'entrée creux (14b) peut être accouplé en entraînement inverse par l'intermédiaire du dispositif de commutation (26) à l'arbre d'entrée (14a) de la deuxième boîte de vitesses partielle (II).

8. Boîte de vitesses selon une ou plusieurs des revendications précédentes, **caractérisée en ce que**, dans une conception avec un différentiel répartiteur (44) connecté à l'arbre entraîné (16), l'arbre entraîné (16) est divisé en deux, l'arbre entraîné (16b) d'une des boîtes de vitesses partielles (I), plus particulièrement de la boîte de vitesses partielle désaccouplable (I), est réalisé sous la forme d'un arbre creux qui entraîne le boîtier de compensation (42) du différentiel répartiteur (44), dont les arbres de sortie (46, 48) entraînent un différentiel d'essieu arrière et, en entraînement arrière à travers l'arbre entraîné creux (16b) et par l'intermédiaire du deuxième arbre entraîné avant (16a), un différentiel d'essieu avant.

9. Boîte de vitesses selon la revendication 8, **caractérisée en ce que** la liaison d'entraînement entre l'arbre entraîné avant (16a) de l'autre boîte de vitesses partielle (II) et l'arbre de sortie à entraînement inverse (46) de la première boîte de vitesses partielle (I), plus particulièrement désacouplable, est désengagée par l'intermédiaire d'un embrayage de commutation (50) disposé entre les boîtes de vitesses partielles (I, II) lorsque l'autre boîte de vitesses partielle (II) est commutée.

10. Boîte de vitesses selon la revendication 9, **caractérisée en ce que** l'embrayage de commutation (50) sur l'arbre entraîné (16) est un embrayage à double commutation à l'aide duquel dans la position neutre la liaison entre l'arbre entraîné (16a) et l'arbre de sortie (46) correspondant est désengagée, dans une position de commutation la liaison est établie et, dans l'autre position de commutation un pignon libre (24) sur l'arbre entraîné (16a) est couplé, par l'intermédiaire de l'arbre secondaire (30) avec des pignons inverseurs (32), au pignon fixe (22) pour le rapport de marche avant (2) sur l'arbre d'entrée (14b) de la boîte de vitesses partielle (I) désaccouplable.

11. Boîte de vitesses selon une ou plusieurs des revendications précédentes, **caractérisée en ce qu'**un des pignons (32 ; 36) formant un rapport de marche arrière (R) est combiné avec un pignon fixe (22) ou un pignon libre (24) pour un rapport de marche avant (2 ou 1).
